# EUROPÄISCHE PATENTSCHRIFT

(11) **EP 1 006 289 B1**
(45) Veröffentlichungstag und Bekanntmachung des Hinweises auf die Patenterteilung: **05.06.2002**
(21) Anmeldenummer: 99123242.2
(22) Anmeldetag: 26.11.1999
(51) Int. Cl.: F16D 65/092

(54) **Bremsbelag für Scheibenbremsen**
Brake lining for disc brakes
Garniture de frein pour freins à disque

(30) Priorität: 02.12.1998 DE 29821482 U
(43) Veröffentlichungstag der Anmeldung: 07.06.2000
(73) Patentinhaber: AlliedSignal Bremsbelag GmbH, 21509 Glinde (DE)
(72) Erfinder: Grimme, Hansjörg, 21509 Glinde (DE); Fischer, Karsten, Dipl.-Ing., 21035 Hamburg (DE)
(74) Vertreter: Richter, Werdermann & Gerbaulet

(56) Entgegenhaltungen:
- DE-A- 1 575 930
- FR-A- 2 441 100
- FR-A- 2 498 713
- FR-A- 2 508 129
- GB-A- 2 259 553
- US-A- 4 173 681

## Beschreibung

Die Erfindung betrifft einen Bremsbelag für Scheibenbremsen gemäß dem Oberbegriff des Anspruches 1.

Bremsbeläge für Scheibenbremsen sind in den verschiedensten Ausführungen bekannt. Typisch ist, daß auf einer metallischen Trägerplatte ein Block aus einem Reibwerkstoff angeordnet ist. Da die Trägerbleche aus metallischen Materialien gefertigt sind, weisen sie ein hohes Gewicht und außerdem einen hohen Wärmedurchgang auf.

Ein Bremsbelag für Scheibenbremsen mit den Merkmalen des Oberbegriffes des Anspruches 1 ist durch die GB-A-2259553 bekannt. Bei diesem Bremsbelag ist der Reibwerkstoff herkömmlicher Art in einer Aussparung einer Trägerplatte aus einer warmaushärtenden Phenolformmischung, also aus einem Material geringer Wärmeleitfähigkeit, gehalten, wobei diese Trägerplatte die Grundplatte für den Reibwerkstoffblock bildet. An dem Boden und der Seitenwand der Aussparung ist der Reibwerkstoff nach der Aushärtung der Phenolharzkomponente der Trägerplatte angeklebt. Eine besonders starke Verbindung des Reibwerkstoffes mit den Wänden der Aussparung entsteht, wenn der Reibwerkstoff selbst auf einem warmaushärtenden Phenolharz basiert.

Die Verklebung des Reibwerkstoffes mit den Wänden der Aussparung in der Trägerplatte erfolgt ausschließlich auf der verklebenden Eigenschaft des Phenolharzes, wenn dieses bei einem Wärmeentzug und nicht bei einer Wärmezufuhr aushärtet. Der Reibwerkstoff wird nur durch die klebende Verbindung durch das ausgehärtete Phenolharz an den Wänden der Aussparung gehalten. Der obere umlaufende Rand der die Ausnehmung begrenzenden Seitenwand der Trägerplatte umgreift in keiner Weise klauenartig den Reibwerkstoff, um einen zusätzlichen Halt des Reibwerkstoffes in der Aussparung zu erreichen. Es soll mit diesem Bremsbelag erreicht werden, dass der Reibwerkstoff des Bremsklotzes vom zugehörigen Bremskolben thermisch isoliert ist, so dass Probleme, die durch Wärmeleitung entstehen, in großem Maße vermieden werden.

Aufgabe der vorliegenden Erfindung ist es, einen Bremsbelag der eingangs beschriebenen Art zu schaffen, dessen Trägerplatte ein geringes Gewicht und einen geringen Wärmedurchgang bei hoher mechanischer Festigkeit aufweist, wobei gleichzeitig das Material der Trägerplatte bei der Herstellung des Bremsbelages in das Material des Reibwerkstoffblokkes integriert wird und den Reibwerkstoffblock klauenartig im Seitenbereich übergreift.

Diese Aufgabe wird bei einem Bremsbelag mit den Merkmalen des Anspruches 1 gelöst.

Danach besteht die Erfindung darin, daß das Material der Trägerplatte die Seitenwände des auf der Trägerplatte angeordneten Reibwerkstoffblokkes soweit übergreift, dass es in die der Trägerplatte abgewandten Seite des Reibwerkstoffblockes eingreift, so daß der Reibwerkstoffblock in das Trägerplattenmaterial integriert ist.

Es hat sich überraschend gezeigt, daß sich als Trägerplattenmaterial besonders vorteilhaft Duroplaste wegen ihrer hohen Festigkeit eignen. Hinzu kommt das geringe Gewicht und die geringe Wärmedurchlässigkeit. Besonders vorteilhaft ist dabei, daß das Material der Trägerplatte bei dessen Herstellung, z.B. im Spritzgußverfahren, in das Material des Reibwerkstoffblockes insbesondere in dessen Seitenwandbereichen eindringt und hier quasi verschweißt, so daß der Reibwerkstoffblock gleichzeitig kraftund formschlüssig auf der Trägerplatte gehalten und mit dieser verbunden ist, zumal das Material der Trägerplatte auch im Auflagebereich des Reibwerkstoffblockes in dessen Material eingreift.

Ausführungsbeispiele der Erfindung sind in den Unteransprüchen angegeben.

Vorteilhafte Ausgestaltungen der Erfindung sind in den Zeichnungen dargestellt. Es zeigen:
- Fig. 1: eine Ansicht von oben auf den aus einer Trägerplatte und einem Reibwerkstoffblock bestehenden Bremsbelag und
- Fig. 2: einen vergrößerten senkrechten Schnitt gemäß Linie II - II in Fig. 1 einer weiteren Ausführungsform.

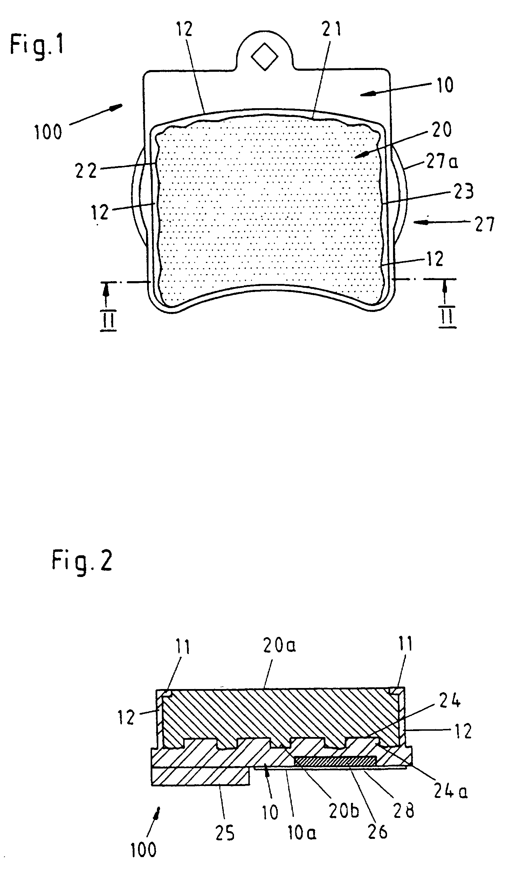

Der Bremsbelag 100 für Scheibenbremsen, insbesondere für Straßenund Schienenfahrzeuge, besteht gemäß Fig. 1 und 2 aus einem in eine Trägerplatte 10 aus einem Duroplast integrierten Block 20 aus einem Reibwerkstoff. Bei der Herstellung des Bremsbelages 100, z.B. im Spritzgußverfahren, wird die Trägerplatte 10 auf einer der beiden Seiten des Reibwerkstoffblockes 20 ausgebildet und aufgesetzt. Der Reibwerkstoffblock 20 wird nicht auf der in einem gesonderten Arbeitsgang hergestellten Trägerplatte 10 befestigt. Der Reibwerkstoffblock wird bei der Herstellung der Trägerplatte 10 quasi ummantelt, so daß die Seitenwände, insbesondere drei zusammenhängende Seitenwände 21, 22, 23 des Reibwerkstoffblockes 20 vom Material der Trägerplatte 10 umgriffen werden (Fig. 1). Die Seitenwände 21, 22, 23 des Reibwerkstoffblockes 20 sind dann von Seitenwänden 12 umgeben, die bei der Herstellung der Trägerplatte 10 ausgebildet werden. Dabei ist das Material der Trägerplatte 10, das die Seitenwände 21, 22, 23 des Reibwerkstoffblockes 20 übergreift, bis in den Randbereich der trägerplattenfreien Oberfläche 20a des Reibwerkstoffblockes 20 geführt und hier mit dem Material des Reibwerkstoffblockes verschweißt. Diese übergreifenden Materialabschnitte sind bei 11 angedeutet (Fig. 2). Auch das Material der Trägerplatte 10, das die Seitenwände 21, 22, 23 des Reibwerkstoffblockes 20 übergreift, sintert quasi in das Material des Reibwerkstoffblockes 20 ein, so daß ein inniger Verbund zwischen dem Material der Trägerplatte 10 und dem Material des Reibwerkstoffblockes 20 entsteht.

Als Duroplast für die Herstellung der Trägerplatte 10 kommen insbesondere Phenoplaste oder Aminoplaste zum Einsatz, wobei auch durch Polyaddition und Polymerisation vernetzende Stoffe oder Stoffgemische wie EP- und UP-Harze und PUR-Produkt-Systeme, verwendet werden können.

Der Reibwerkstoffblock 20 kann an der Unterseite 20b mit Vertiefungen 24 versehen werden, die dann mit dem Material 24a der Trägerplatte 10 ausgefüllt sind. Damit greift das Material der Trägerplatte 10 in das Material des Reibwerkstoffblockes 20 und sintert genau in das Material des Reibwerkstoffblockes 20 ein, so daß ein inniger Verbund entsteht.

Als Maßnahme zur Beeinflußung des Geräuschverhaltens, d.h. zur Beeinflußung der Eigenfrequenz des gesamten Bauteils - Reibbelagblock 20 und Trägerplatte 10 - kann die Rückseite 10a der Trägerplatte 10 in einer geometrisch uneinheitlichen Form, nämlich mit Schrägen oder Vertiefungen / Erhöhungen / Eindrückungen 25 etc. ausgestaltet werden, die aus dem gleichen Material bestehen, aus dem die Trägerplatte gefertigt ist. Es ist ebenso möglich, in das Material der Trägerplatte 10 Materialien mit einer anderen Dichte einzuarbeiten bzw. Einlagen 26 vorzusehen, damit das Geräuschverhalten beeinflußt wird. Die Trägerplatte 10 und die Formgebung 25 bestehen aus den gleichen Materialien.

Einlegeteile 27a, z.B. aus Metall in der Trägerplatte 10, können die mechanischen Eigenschaften des Duroplast-Materials unterstützen in den Bereichen, in denen mechanische Eigenschaften besonders von Nöten sind, z.B. in Führungsflächen 27 oder Kontaktflächen des Bremskolbens. Die Einlegeteile 27a können die verschiedensten Geometrien aufweisen.

Zur mechanischen Entkopplung zwischen Bremsbelag / Trägerplatte und Bremse (Bremskolben) kann in einem weiteren Arbeitsschritt direkt auf die Trägerplatte eine Trennschicht 28 z.B. aus einem Elastomer aufgebracht werden. Nach dem Aufbringen eines Haftvermittlers wird das Elastomer z.B. im Spritzgußverfahren formschlüssig auf die Trägerplatte 10 aufgetragen. Die Trennschicht 28 kann auch auf die Erhöhung 25 und in die Vertiefungen auf der Rückseite 10a der Trägerplatte 10 aufgebracht werden (nicht dargestellt).

## Patentansprüche

1. Bremsbelag (100) für Scheibenbremsen, insbesondere für Straßen- und Schienenfahrzeuge, der aus einer Trägerplatte (10) und einem auf dieser befestigten Block (20) aus einem gepreßten Reibwerkstoff besteht, wobei der Reibwerkstoffblock (20) auf der Trägerplatte (10) kraft- und formschlüssig befestigt ist, die aus einem harten, amorphen und bis zur Zersetzungstemperatur starren Kunststoff, der aus räumlich engmaschig vernetzten Makromolekülen mit hoher mechanischer Festigkeit aufgebaut ist, wie z.B. einem Duroplast, besteht, wobei das Material der Trägerplatte (10) mit dem Material des Reibwerkstoffblockes sich verbindet und die Seitenwände des auf der Trägerplatte angeordneten Reibwerkstoffblockes umschließt,
**dadurch gekennzeichnet,**
**daß** das Material der Trägerplatte (10) in die trägerplattenfreie Oberfläche (20a) des Reibwerkstoffblockes (20) eingreift und die Seitenwände (21, 22,23) des auf der Trägerplatte (10) angeordneten Reibwerkstoffblockes (20) so weit übergreift, dass es in die der Trägerplatte (10) abgewandten Seite des Reibwerkstoffblockes (20) eingreift und mit dem Material des Reibwerkstoffblockes (20) verschweißt ist.

2. Bremsbelag nach Anspruch 1,
**dadurch gekennzeichnet,**
**daß** die Trägerplatte (10) im Spritzgußverfahren auf den Reibwerkstoffblock (20) bei gleichzeitiger Ummantelung der Seitenwände (21, 22, 23) des Reibwerkstoffblockes (20) aufgespritzt wird.

3. Bremsbelag nach einem der Ansprüche 1 und 2,
**dadurch gekennzeichnet,**
**daß** das Material der Trägerplatte (10), insbesondere das die Seitenwände (21, 22, 23) des Reibwerkstoffblockes (20) umgreifende Material und auch im Oberflächenbereich des Reibwerkstoffblockes (20) in das Material des Reibwerkstoffblockes eingeschmolzen ist.

4. Bremsbelag nach einem der Ansprüche 1 bis 3,
**dadurch gekennzeichnet,**
**daß** der Reibwerkstoff (20) an seiner der Trägerplatte (10) zugewandten Unterseite (20b) Einziehungen und/oder Vertiefungen zur Aufnahme von Material (24a) der Trägerplatte (10) aufweist.

5. Bremsbelag nach einem der Ansprüche 1 bis 3,
**dadurch gekennzeichnet,**
**daß** der Reibwerkstoff (20) an seiner der Trägerplatte (10) zugewandten Unterseite (20b) eine Profilierung aus Nuten, Rillen oder Rinnen zur Aufnahme von Material der Trägerplatte (10) aufweist.

6. Bremsbelag nach einem der Ansprüche 1 bis 5,
**dadurch gekennzeichnet,**
**daß** die Trägerplatte (10) auf ihrer von dem Reibwerkstoff (20) abgewandten Rückseite (10a) Vertiefungen und /oder Erhöhungen (25) aufweist.

7. Bremsbelag nach einem der Ansprüche 1 bis 5,
**dadurch gekennzeichnet,**
**daß** die Trägerplatte (10) auf ihrer von dem Reibwerkstoff (20) abgewandten Rückseite (10a) eine Profilierung aus Vertiefungen und/oder Erhöhungen aufweist.

8. Bremsbelag nach einem der Ansprüche 1 bis 7,
**dadurch gekennzeichnet,**
**daß** die Trägerplatte (10) mindestens eine Einlage (26) und/oder einen Bereich mit einer vom restlichen Material der Trägerplatte (10) abweichenden Materialdichte aufweist.

9. Bremsbelag nach einem der Ansprüche 1 bis 8,
**dadurch gekennzeichnet,**
**daß** die Trägerplatte (10) an einem mechanisch höher beanspruchten Bereich mit mindestens einem Einlegeteil (27a) versehen ist.

10. Bremsbelag nach einem der Ansprüche 1 bis 9,
**dadurch gekennzeichnet,**
**daß** die Trägerplatte (10) auf ihrer von dem Reibwerkstoff (20) abgewandten Rückseite (10a) mit einer Trennschicht (28) versehen ist.

## Claims

1. A brake lining (100) for disk brakes, in particular for road and rail vehicles, which comprises a carrier plate (10) and a block (20) fixed thereon made of a pressed friction material, the friction material block (20) being fixed positively and nonpositively on the carrier plate (10) which is made of a hard amorphous plastic rigid up to the decomposition temperature which is composed of spatially close meshed interlaced macromolecules with a high mechanical strength like for example a duroplastic, whereby the material of the carrier plate (10) combines with the material of the friction material block and surrounds the side walls of the friction material block placed on the carrier plate,
**characterized in**
**that** the material of the carrier plate (10) grips into the carrier plate free surface (20a) of the friction material block (20) and overlaps the side walls (21, 22, 23) of the friction material block (20) placed on the carrier plate (10) as widely as it grips into the side of the friction material block (20) turned away from the carrier plate (10) and is welded with the material of the friction material block (20).

2. A brake lining according to claim 2,
**characterized in**
**that** the carrier plate (10) is injected by injection moulding onto the friction material block (20) during the simultaneous encasing of the side walls (21, 22, 23) of the friction material block (20).

3. A brake lining according to one of the claims 1 and 2,
**characterized in**
**that** the material of the carrier plate (10), in particular the material overlapping the side walls (21, 22, 23) of the friction material block (20), is melt down into the material of the friction material block, also in the surface area of the friction material block (20).

4. A brake lining according to one of the claims 1 to 3,
**characterized in**
**that** the friction material (20) has, on its lower side (20b) turned to the carrier plate (10), tapers and/or recesses for receiving the material (24a) of the carrier plate (10).

5. A brake lining according to one of the claims 1 to 3,
**characterized in**
**that** the friction material (20) has, on its tower side (20b) turned to the carrier plate (10), a profile shaping made of slits, grooves or flutes for receiving the material of the carrier plate (10).

6. A brake lining according to one of the claims 1 to 5,
**characterized in**
**that** the carrier plate (10) has, on its rear side (10a) turned away from the friction material (20), recesses and/or raised parts (25).

7. A brake lining according to one of the claims 1 to 5,
**characterized in**
**that** the carrier plate (10) has, on its rear side (10a) turned away from the friction material (20), a profile shaping made of recesses and/or raised parts.

8. A brake lining according to one of the claims 1 to 7,
**characterized in**
**that** the carrier plate (10) has at least one intermediate layer (26) and/or an area with a material density different from the residual material of the carrier plate (10).

9. A brake lining according to one of the claims 1 to 8,
**characterized in**
**that** the carrier plate (10) is provided with at least one insert (27a) on one area which is more stressed mechanically.

10. A brake lining according to one of the claims 1 to 9,
**characterized in**
**that** the carrier plate (10) is provided with a separating layer (28) on its rear side (10a) turned away from the friction material (20).

## Revendications

1. Garniture de frein (100) pour freins à disque, en particulier pour véhicules routiers et sur rails, qui est constituée par une plaque de support (10) et un bloc (20) de matériau de friction pressé fixé sur celle-ci, le bloc de matériau de friction (20) étant fixé par adhérence et de manière crabotée sur la plaque de support (10) qui est composée d'une matière plastique dure, amorphe et rigide jusqu'à la température de décomposition, qui est constituée par des macromolécules réticulées à mailles serrées dans l'espace à résistance mécanique élevée, comme par exemple un duroplast, le matériau de la plaque de support (10) se liant au matériau du bloc de matériau de friction et entourant les parois latérales du bloc de matériau de friction placé sur la plaque de support,
**caractérisée en ce**
**que** le matériau de la plaque de support (10) s'engrène dans la surface exempte de plaque de support (20a) du bloc de matériau de friction (20) et enveloppe les parois latérales (21, 22, 23) du bloc de matériau de friction (20) placé sur la plaque de support (10) de manière aussi large pour s'engrener dans le côté du bloc de matériau de friction (20) détourné de la plaque de support (10) et être soudé au matériau du bloc du matériau de friction (20).

2. Garniture de frein selon la revendication 1,
**caractérisée en ce**
**que** la plaque de support (10) est injectée en moulage par injection sur le bloc de matériau de friction (20) lors de l'enrobage simultané des parois latérales (21, 22, 23) du bloc de matériau de friction (20).

3. Garniture de frein selon l'une des revendications 1 et 2,
**caractérisée en ce**
**que** le matériau de la plaque de support (10), en particulier le matériau qui enveloppe les parois latérales (21, 22, 23) du bloc de matériau de friction (20), est fondu dans le matériau de bloc de matériau de friction, également dans la zone de la surface du bloc de matériau de friction.

4. Garniture de friction selon l'une des revendications 1 à 3,
**caractérisée en ce**
**que** le matériau de friction (20) présente, sur sa face inférieure (20b) tournée vers la plaque de support (10), des rétrécissements et/ou des enfoncements pour recevoir le matériau (24a) de la plaque de support (10).

5. Garniture de friction selon l'une des revendications 1 à 3,
**caractérisée en ce**
**que** le matériau de friction (20) présente, sur sa face inférieure (20b) tournée vers la plaque de support (10), un profilage constitué par des rainures, des cannelures ou des goulottes pour recevoir le matériau de la plaque de support (10).

6. Garniture de friction selon l'une des revendications 1 à 5,
**caractérisée en ce**
**que** la plaque de support (10) présente, sur sa face arrière (10a) détournée du matériau de friction (20), des enfoncements et/ou des rehaussements (25).

7. Garniture de frein selon l'une des revendications 1 à 5,
**caractérisée en ce**
**que** la plaque de support (10) présente, sur sa face arrière (10a) détournée du matériau de friction (20), un profilage constitué par des enfoncements et/ou des rehaussements (25).

8. Garniture de frein selon l'une des revendications 1 à 7,
**caractérisée en ce**
**que** la plaque de support (10) présente au moins un insert (26) et/ou une zone avec une densité de matériau différente du reste du matériau de la plaque de support (10).

9. Garniture de frein selon l'une des revendications 1 à 8,
**caractérisée en ce**
**que** la plaque de support (10) est pourvue d'au moins une pièce d'insertion (27a) sur une zone plus sollicitée mécaniquement.

10. Garniture de frein selon l'une des revendications 1 à 9,
**caractérisée en ce**
**que** la plaque de support (10) est pourvue d'une couche de séparation (28) sur sa face arrière (10a) détournée du matériau de friction (20).
